# EUROPÄISCHE PATENTSCHRIFT

(11) **EP 3 160 806 B1**
(45) Veröffentlichungstag und Bekanntmachung des Hinweises auf die Patenterteilung: **11.07.2018**
(21) Anmeldenummer: 15720341.5
(22) Anmeldetag: 08.05.2015
(51) Int. Cl.: B60T 8/40

(54) **BREMSANLAGE FÜR EIN KRAFTFAHRZEUG**
BRAKING SYSTEM FOR A MOTOR VEHICLE
SYSTÈME DE FREINAGE POUR VÉHICULE À MOTEUR

(30) Priorität: 30.06.2014 DE 102014212537
(43) Veröffentlichungstag der Anmeldung: 03.05.2017
(73) Patentinhaber: Continental Teves AG & Co. OHG, 60488 Frankfurt (DE)
(72) Erfinder: BESIER, Marco, 65307 Bad Schwalbach (DE); DRUMM, Stefan, 55291 Saulheim (DE)
(86) Internationale Anmeldenummer: PCT/EP2015/060176
(87) Internationale Veröffentlichungsnummer: WO 2016/000858

(56) Entgegenhaltungen:
- WO-A1-2012/028521
- WO-A1-2012/150120
- DE-A1-102008 060 029
- DE-A1-102011 084 206
- JP-A- 2009 227 093

## Beschreibung

Die Erfindung betrifft eine Bremsanlage für ein Kraftfahrzeug gemäß dem Oberbegriff von Anspruch 1.

In der Kraftfahrzeugtechnik finden "Brake-by-wire"-Bremsanlagen eine immer größere Verbreitung. Solche Bremsanlagen umfassen oftmals neben einem durch den Fahrzeugführer betätigbaren Hauptbremszylinder eine elektrisch steuerbare Druckbereitstellungseinrichtung, mittels welcher in der Betriebsart "Brake-by-wire" der hydraulische Druck zur Betätigung der Radbremsen aufgebaut wird. Das Vorhandensein eines "Brake-by-wire"-Betriebsmodus der Bremsanlage ist die Voraussetzung für ein automatisiertes Fahren, bei dem eine elektronische Autopilot-Funktion das Fahrzeug entweder vollständig selbständig oder in Kooperation mit dem Fahrer lenkt, beschleunigt und bremst.

Um die Sicherheitsanforderungen für ein automatisiertes Fahren, insbesondere die Durchführung einer Bremsung ohne Betätigung des Bremspedals durch den Fahrer, auch im Falle eines Ausfalls der elektrisch steuerbaren Druckbereitstellungseinrichtung, zu erfüllen, ist eine zweite, unabhängige Einrichtung zur elektrisch steuerbaren Bereitstellung von Bremsdruck notwendig.

Aus der DE 10 2011 084 206 A1 ist eine Bremsanlage für Kraftfahrzeuge bekannt mit einem Hauptbremszylinder, welcher durch einen elektrohydraulischen Aktuator elektrisch betätigbar ist, einem Motor-Pumpen-Aggregat und einer Radbremsdruck-Modulationseinheit mit einem Einlass- und einem Auslassventil je Radbremse. Es sind zwei elektronische Steuer- und Regeleinheiten vorgesehen, wobei die erste Steuer- und Regeleinheit zur Ansteuerung des Motor-Pumpen-Aggregats und der Radbremsdruck-Modulationseinheit und die zweite Steuer- und Regeleinheit zur Ansteuerung des elektrohydraulischen Aktuators zur Betätigung des Hauptbremszylinders dient. Weiterhin sind zwei separate Energieversorgungen vorgesehen, wobei die erste Energieversorgung die erste Steuer- und Regeleinheit und die zweite Energieversorgung die zweite Steuer- und Regeleinheit mit elektrischer Energie versorgt. Bei Ausfall der ersten Energieversorgung ist nur noch ein einheitlicher Bremsdruckaufbau bzw. -abbau an allen Radbremsen mittels des elektrohydraulischen Aktuators möglich. Das Einstellen radindividueller Bremsdrücke, insbesondere eine Antiblockier-Regelung (ABS: Anti-Blockier-System) oder eine Fahrdynamikregelung (ESC: Electronic Stability Control) oder eine andere stabilisierende Assistenzfunktion der Bremsanlage, ist in der bekannten Bremsanlage in diesem Falle nicht möglich.

In der WO 2012/028521 A1 wird eine Bremsanlage beschrieben, welche eine ersten elektrisch steuerbare Druckquelle zur Betätigung der Radbremsen, eine elektrisch steuerbare Zusatzdruckbereitstellungsvorrichtung, mittels welcher ein Hauptbremszylinder betätigbar ist, an den die Radbremsen angeschlossen sind, und eine Druckregelventilanordnung umfasst. Dabei wird die erste Druckquelle aus dem elektrischen Bordnetz des Fahrzeugs mit Energie versorgt, die Zusatzdruckbereitstellungsvorrichtung umfasst einen elektrischen Energiespeicher. Eine Energieversorgung der Druckregelventilanordnung wird nicht angesprochen.

Es ist daher Aufgabe der vorliegenden Erfindung, eine Bremsanlage für ein Kraftfahrzeug bereitzustellen, welche die Sicherheitsanforderungen des automatisierten Fahrens erfüllt.

Diese Aufgabe wird erfindungsgemäß durch eine Bremsanlage gemäß Anspruch 1 gelöst.

Eine weitere Aufgabe der vorliegenden Erfindung kann darin gesehen werden, eine Bremsanlage mit einer verbesserten Verfügbarkeit von Assistenzfunktionen mit radindividueller Bremsdruckregelung oder -steuerung bereitzustellen.

Der Erfindung liegt der Gedanke zugrunde, dass die erste Druckquelle von einer ersten Energieversorgungseinheit mit elektrischer Energie versorgbar ist, die zweite Druckquelle von einer von der ersten Energieversorgungseinheit unabhängigen zweiten Energieversorgungseinheit mit elektrischer Energie versorgbar ist und die Druckmodulationseinrichtung von der ersten Energieversorgungseinheit und der zweiten Energieversorgungseinheit mit elektrischer Energie versorgbar ist.

Die Erfindung bietet den Vorteil, dass nach einem Ausfall einer der Energieversorgungseinheiten immer noch eine der Druckquellen sowie die Druckmodulationseinrichtung mit elektrischer Energie versorgt werden können, um so eine radindividuelle Bremsdruckregelung, und somit eine sichere Bremsung durchführen zu können.

Die Druckmodulationseinrichtung umfasst zumindest ein elektrisch betätigbares Einlassventil für jede Radbremse. Bevorzugt sind ein elektrisch betätigbares Einlassventil und ein elektrisch betätigbares Auslassventil für jede Radbremse vorgesehen.

Bevorzugt sind mittels der Druckmodulationseinrichtung aus dem von der ersten Druckquelle bereitgestellten Bremsdruck oder dem von der zweiten Druckquelle bereitgestellten Bremsdruck oder dem mittels beider Druckquellen bereitgestellten Bremsdruck radindividuelle Bremsdrücke abgeleitet.

Die zweite Druckquelle ist bevorzugt hydraulisch zwischen der ersten Druckquelle und der Druckmodulationseinrichtung angeordnet. Hierdurch kann bei Bedarf eine Verstärkung des von der ersten Druckquelle abgegebenen Druckes durchgeführt werden.

Bevorzugt ist die erste Druckquelle ausschließlich von der ersten Energieversorgungseinheit mit elektrischer Energie versorgbar und die zweite Druckquelle ausschließlich von der zweiten Energieversorgungseinheit mit elektrischer Energie versorgbar. Dies bietet gegenüber einer Bremsanlage, bei welcher zumindest eine der beiden Druckquellen von der ersten und der zweiten Energieversorgungseinheit versorgt werden kann, eine geringere Anzahl von Versorgungsleitungen von den Energieversorgungseinheiten zu den Druckquellen.

Gemäß einer Weiterbildung der Erfindung umfasst die Bremsanlage eine der ersten Druckquelle zugeordnete erste elektronische Steuer- und Regeleinheit zur Ansteuerung der ersten Druckquelle, eine der zweiten Druckquelle zugeordnete zweite elektronische Steuer- und Regeleinheit zur Ansteuerung der zweiten Druckquelle und eine der Druckmodulationseinrichtung zugeordnete dritte elektronische Steuer- und Regeleinheit zur Ansteuerung der Druckmodulationseinrichtung. Durch die separat ausgeführte, dritte Steuer- und Regeleinheit für die Druckmodulationseinrichtung kann erreicht werden, dass die Verfügbarkeit von radindividuellen Bremsdruckregelfunktionen erhöht wird.

Die Druckmodulationseinrichtung ist bevorzugt als eine eigenständige hydraulische Einheit ausgeführt. Die Druckmodulationseinrichtung und die dritte elektronische Steuer- und Regeleinheit ist besonders bevorzugt als eine elektrohydraulische Steuereinheit ausgeführt.

Gemäß einer bevorzugten Ausführungsform der erfindungsgemäßen Bremsanlage ist die erste elektronische Steuer- und Regeleinheit von der ersten Energieversorgungseinheit mit elektrischer Energie versorgbar, die zweite elektronische Steuer- und Regeleinheit von der zweiten Energieversorgungseinheit mit elektrischer Energie versorgbar und die dritte elektronische Steuer- und Regeleinheit von der ersten Energieversorgungseinheit und von der zweiten Energieversorgungseinheit mit elektrischer Energie versorgbar. Dies bietet den Vorteil, dass nach einem Ausfall der ersten oder der zweiten Steuer- und Regeleinheiten immer noch eine der Druckquellen sowie die Druckmodulationseinrichtung mit elektrischer Energie versorgt werden können, um so eine radindividuelle Bremsdruckregelung, und somit eine sichere Bremsung durchführen zu können.

Die erste und die zweite Druckquelle und die Druckmodulationseinrichtung werden bevorzugt über die ihr zugeordnete elektronische Steuer- und Regeleinheit mit elektrischer Energie versorgt.

Um Antiblockier-Regelungen ausführen zu können, umfasst die Bremsanlage bevorzugt Raddrehzahlsensoren oder ist mit solchen verbunden, wobei die Signale der Raddrehzahlsensoren der dritten Steuer- und Regeleinheit zugeführt werden. Die Verarbeitung der Signale wird besonders bevorzugt in der dritten Steuer- und Regeleinheit durchgeführt, so dass die für eine Ansteuerung der Druckmodulationseinrichtung bei einer radindividuellen Bremsdruckregelung benötigten Daten auch bei Ausfall der ersten oder zweiten Steuer- und Regeleinheit verfügbar sind.

Die Bremsanlage umfasst zusätzlich bevorzugt eine Sensoreinrichtung zur Erfassung von Fahrdynamikgrößen oder ist mit einer solchen verbunden, wobei die Signale der Sensoreinrichtung der der Druckmodulationseinrichtung zugeordneten dritten Steuer- und Regeleinheit zugeführt werden. Die Verarbeitung der Signale wird besonders bevorzugt in der dritten Steuer- und Regeleinheit durchgeführt. Hierdurch ist eine fahrdynamische, radindividuelle Bremsdruckregelung auch bei Ausfall der ersten oder zweiten Steuer- und Regeleinheit möglich.

Bevorzugt umfasst die Sensoreinrichtung zumindest einen Sensor zur Erfassung der Gierrate des Kraftfahrzeugs, zumindest einen Sensor zur Erfassung der Querbeschleunigung des Kraftfahrzeugs und/oder einen Sensor zur Erfassung der Längsbeschleunigung des Kraftfahrzeugs.

Die erste, die zweite und die dritte Steuer- und Regeleinheit sind bevorzugt über Datenbusse miteinander verbunden.

Um ein automatisiertes Fahren durchzuführen, ist gemäß einer Weiterbildung der Bremsanlage zumindest eine der drei Steuer- und Regeleinheiten mit einer vierten elektronischen Steuer- und Regeleinheit über einen Datenübertragungspfad verbunden oder verbindbar, in welcher eine Autopilot-Funktion durchgeführt wird.

Um einen unabhängigen Druckaufbau mittels jeder der beiden Druckquellen unabhängig durchführen zu können, ist bevorzugt zumindest die erste und die zweite Steuer- und Regeleinheit über jeweils einen Datenübertragungspfad mit der vierten Steuer- und Regeleinheit verbunden oder verbindbar. Besonders bevorzugt ist jedoch jede der drei Steuer- und Regeleinheiten über einen Datenübertragungspfad mit der vierten Steuer- und Regeleinheit verbunden oder verbindbar. Der Datenübertragungspfad besteht vorteilhaftweise aus einem Datenbus.

Gemäß einer bevorzugten Ausführungsform der erfindungsgemäßen Bremsanlage umfasst die zweite Druckquelle ein Motor-Pumpen-Aggregat mit einer zumindest zweikreisigen hydraulischen Pumpe. Derartige Aggregate sind an sich seit langer Zeit bekannt und können hohe Drücke erzeugen und in sehr kompakter Baugröße realisiert werden.

Weiterhin umfasst die zweite Druckquelle bevorzugt elektrisch betätigbare Ventile zum Einstellen des an die Druckmodulationseinrichtung weitergeleiteten Bremsdrucks oder der an die Druckmodulationseinrichtung weitergeleiteten Bremsdrücke. Besonders bevorzugt sind auch Ventile vorgesehen, die eine Trennung der Verbindung zwischen erster Druckquelle und Druckmodulationseinrichtung ermöglichen.

Weitere bevorzugte Ausführungsformen der Erfindung ergeben sich aus den Unteransprüchen und der nachfolgenden Beschreibung anhand von Figuren.

Es zeigen
- Fig. 1: ein erstes Ausführungsbeispiel einer erfindungsgemäßen Bremsanlage, und
- Fig. 2: ein zweites Ausführungsbeispiel einer erfindungsgemäßen Bremsanlage.

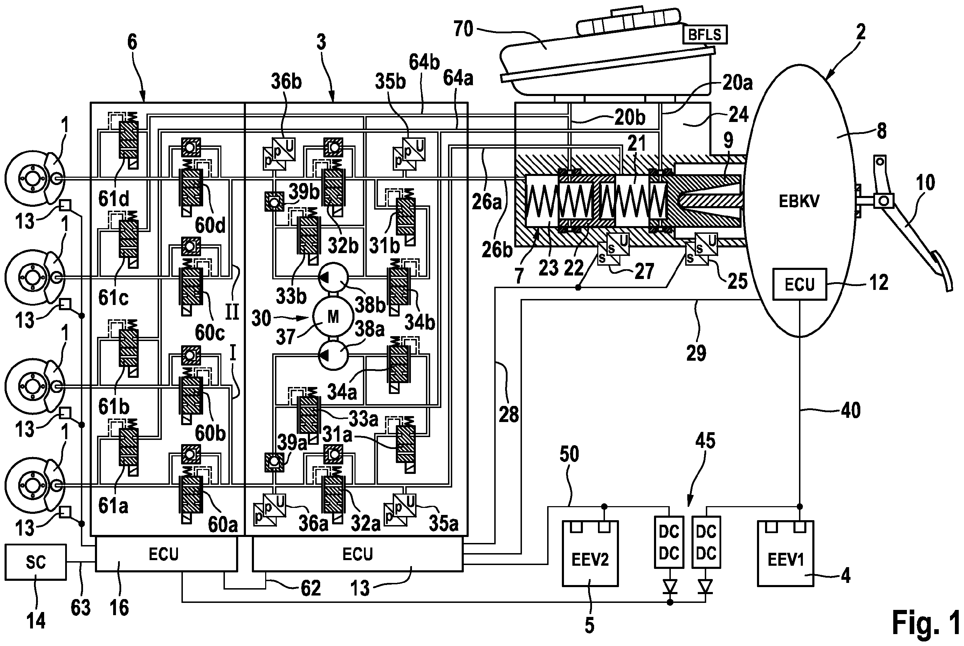

Die beispielsgemäße Bremsanlage gemäß Fig. 1 umfasst im Wesentlichen eine erste elektrisch steuerbare Druckquelle 2 zur Bereitstellung eines Bremsdrucks zur Betätigung der Radbremsen 1 eines nicht dargestellten Kraftfahrzeugs, eine zweite elektrisch steuerbare Druckquelle 3 zur Bereitstellung eines Bremsdrucks zur Betätigung der Radbremsen 1, eine elektrisch steuerbare Druckmodulationseinrichtung 6 zum Einstellen radindividueller Bremsdrücke für die Radbremsen 1, eine erste, eine zweite und eine dritte elektronische Steuer- und Regeleinheit (ECU: electronic control unit) 12, 13, 16 sowie eine erste elektrische Energieversorgungseinheit 4 und eine zweite elektrische Energieversorgungseinheit 5, welche von der ersten elektrischen Energieversorgungseinheit unabhängig ist.

Die erste elektronische Steuer- und Regeleinheit 12 ist der ersten Druckquelle 2 zugeordnet und dient zur Ansteuerung der ersten Druckquelle 2. Die zweite elektronische Steuer- und Regeleinheit 13 ist der zweiten Druckquelle 5 zugeordnete und dient zur Ansteuerung der zweiten Druckquelle 3 und die dritte elektronische Steuer- und Regeleinheit 16 ist der Druckmodulationseinrichtung 6 zugeordnet und dient zur Ansteuerung der Druckmodulationseinrichtung 6.

Die erste elektrisch steuerbare Druckquelle 2 umfasst einen zweikreisigen Hauptbremszylinder 7 mit zwei hintereinander angeordnete Kolben 9, 22, die zwei hydraulische Druckräume 21, 23 begrenzen. Die Druckräume 21, 23 stehen einerseits über in den Kolben 9, 22 ausgebildete radiale Bohrungen sowie entsprechende Druckausgleichsleitungen 20a, 20b mit einem unter Atmosphärendruck stehenden Druckmittelvorratsbehälter 70 in Verbindung, wobei diese durch eine Relativbewegung der Kolben 9, 22 im Gehäuse 24 absperrbar sind. Andererseits steht jeder der Druckräume 21 bzw. 23 mittels einer hydraulischen Verbindung 26a bzw. 26b mit der Druckmodulationseinrichtung 6 in Verbindung. Die Druckräume 21, 23 nehmen nicht näher bezeichnete Rückstellfedern auf, die die Kolben 9, 22 bei unbetätigtem Hauptbremszylinder 7 in einer Ausgangslage positionieren.

Weiterhin umfasst die erste steuerbare Druckquelle 2 einen elektrisch steuerbaren Bremskraftverstärker 8, welcher dem Hauptbremszylinder 7 vorgeschaltet ist. Beispielsgemäß umfasst der Bremskraftverstärker 8 einen nicht näher dargestellten, elektrisch steuerbaren elektromechanischen Aktuator, mittels welchem der Kolben 9 des Hauptbremszylinders 7 betätigbar ist.

Eine Betätigung des Bremspedals 10 der Bremsanlage wird z.B. mittels eines nicht dargestellten Weg- oder Winkelsensors, z.B. in dem Bremskraftverstärker 8, erfasst und das Sensorsignal an die der ersten Druckquelle 2 zugeordnete erste elektronische Steuer- und Regeleinheit 12 weitergeleitet.

Soll eine verstärkte Bremsung durchgeführt werden, steuert die Steuer- und Regeleinheit 12 den elektromechanischen Aktuator des Bremskraftverstärkers 8 an. Der elektromechanischen Aktuator umfasst beispielsgemäß einen Elektromotor und ein Rotations-Translations-Getriebe, mittels welchen die gewünschte Betätigungskraft auf den Kolben 9 des Hauptbremszylinders 7 ausgeübt werden kann.

Zwischen der ersten und der zweiten Steuer- und Regeleinheit 12, 13 ist vorteilhafterweise eine Signal- oder Datenleitung 29 vorhanden, über welche die erste Steuer- und Regeleinheit 12 der zweiten Steuer- und Regeleinheit 13 einen Zustandsstatus der ersten Druckquelle übermitteln kann. Z.B. kann die erste Steuer- und Regeleinheit 12 im Falle eines Fehlers der ersten Druckquelle 2 der zweiten Steuer- und Regeleinheit 13 eine Fehlermeldung übermitteln. Alternativ oder zusätzlich kann die erste Steuer- und Regeleinheit 12 der zweiten Steuer- und Regeleinheit 13 ein "in Ordnung"-Signal übermitteln, wenn die erste Druckquelle funktionsfähig ist. In beiden Fällen kann die zweite Steuer- und Regeleinheit 13 anhand des übermittelten Zustandsstatus der ersten Druckquelle erkennen, ob die zweite Druckquelle 3 zur Betätigung der Radbremsen angesteuert werden soll.

Durch die hydraulische Hintereinanderschaltung der beiden Druckquellen ist ein Aufbau der Drücke an der Druckmodulationseinrichtung (sog. Modulatorvordrücke) selbst dann gewährleistet, wenn die erste Druckquelle, z.B. infolge eines Ausfalls der ersten elektrischen Energieversorgung, nicht betriebsbereit ist und die erste Steuer- und Regeleinheit 12 auch kein entsprechendes Fehlersignal sendet. Für diesen Fall sind zur unabhängigen Betätigung der Radbremsen und geeigneten Ansteuerung der zweite Druckquelle 3 vorteilhafterweise zwei weitere, unabhängige Wegsensoren 25 und 27 vorgesehen, die z.B. eine Verschiebung der Kolben 9 und 22 erfassen, und deren Signale über eine Signal- oder Datenleitung 28 an die der zweiten Druckquelle 3 zugeordnete zweite elektronische Steuer- und Regeleinheit 13 übermittelt werden.

Die zweite elektrisch steuerbare Druckquelle 3 ist beispielsgemäß als eine eigenständige hydraulische Einheit ausgeführt, die hydraulisch zwischen der ersten Druckquelle 2 und der Druckmodulationseinrichtung 6 angeordnet ist.

Bevorzugt sind die Hydraulikeinheit 3 und die Elektronikeinheit 13 als eine elektrohydraulische Steuereinheit (HECU) ausgeführt.

Druckquelle 3 umfasst im Wesentlichen eine elektrisch steuerbare Druckbereitstellungseinrichtung 30, welche beispielsgemäß als ein zweikreisiges Motor-Pumpen-Aggregat ausgeführt ist, sowie elektrisch betätigbare Ventile 31a, 32a, 33a, 34a, 31b, 32b, 33b, 34b zur Einstellung des an die Druckmodulationseinrichtung 6 weitergeleiteten Bremsdrucks je Bremskreis bzw. je hydraulischer Leitung 26a bzw. 26b. Andere Ausführungsformen der zweiten Druckquelle, z.B. mit einer anderen Druckbereitstellungseinrichtung und/oder einer anderen Ventilkombination, sind möglich.

Motor-Pumpen-Aggregat 30 umfasst beispielsgemäß zwei von einem Elektromotor 37 gemeinsam angetriebene Pumpen 38a, 38b. Das Motor-Pumpen-Aggregat ist vorzugsweise vom Typ einer vom Elektromotor über einen Exzenter angetriebenen Kolbenpumpe ausgebildet, einer Bauform, die in bekannten Bremssystemen als Rückförderpumpe bereits millionenfach eingesetzt wird. Diese kann besonders hohe Systemdrücke erzeugen und kann in sehr kompakter Baugröße realisiert werden.

Beispielsgemäß sind je Bremskreis vier elektrisch betätigbare Ventile 31a, 32a, 33a, 34a, bzw. 31b, 32b, 33b, 34b sowie zwei Drucksensoren 35a, 36a bzw. 35b, 36b vorgesehen.

In den Verbindungen 26a, 26b ist jeweils ein stromlos offen ausgeführtes, vorteilhafterweise analog ansteuerbares, Druckanhebungsventil 32a, 32b angeordnet, mittels welchem die hydraulische Verbindung zwischen dem Hauptbremszylinderdruckraum 21, 23 und der Druckmodulationseinrichtung 6 unterbrochen werden kann. Dem Druckanhebungsventil 32a, 32b ist je ein zu der Druckmodulationseinrichtung 6 hin öffnendes, nicht näher bezeichnetes Rückschlagventil parallel geschaltet. Der Druck vor und hinter dem Druckanhebungsventil 32a, 32b wird mittels der Drucksensoren 35a, 36a bzw. 35b, 36b gemessen.

Je Bremskreis ist der Sauganschluss der Pumpe 38a, 38b mit einer zum Druckmittelvorratsbehälter 70 führenden Rücklaufleitung 64a, 64b verbunden, so dass Druckmittel aus dem Druckmittelvorratsbehälter 70 angesaugt werden kann. Der jeweilige Druckanschluss der Pumpe 38a, 38b ist über ein zu der Druckmodulationseinrichtung 6 hin öffnendes Rückschlagventil 39a, 39b mit dem zugeordneten Eingangsanschluss der Druckmodulationseinrichtung 6 verbunden. Der Pumpe 38a, 38b ist jeweils ein stromlos offen ausgeführtes, vorteilhafterweise analog ansteuerbares, Staudruckventil 33a, 33b parallel geschaltet. Weiterhin ist der Sauganschluss der Pumpe 38a, 38b jeweils über eine hydraulische Verbindung mit dem Hauptbremszylinderdruckraumseitigen Bereich der Verbindung 26a, 26b verbunden, wobei in der hydraulischen Verbindung von Verbindung 26a, 26b kommend, eine Hintereinanderschaltung eines stromlos geschlossen ausgeführten Abbau-Freigabeventils 31a, 31b und des stromlos offen ausgeführten, vorteilhafterweise analog ansteuerbaren, Abbau-Dosierventils 34a, 34b vorgesehen ist.

Druckmodulationseinrichtung 6 ist als eine eigenständige hydraulische Einheit ausgeführt und umfasst beispielsgemäß je Radbremse 1 ein Einlassventil 60a-60d und ein Auslassventil 61a-61d, die paarweise über Mittenanschlüsse hydraulisch zusammengeschaltet und an die Radbremse 1 angeschlossen sind. Die Eingangsanschlüsse der Einlassventile 60a-60d werden von der zweiten Druckquelle 3 mit einem Druck je Bremskreis I, II versorgt (Modulatorvordruck). Bei nicht aktiver zweiter Druckquelle 3 entsprechen diese Drücke den Hauptbremszylinderdrücken. Den Einlassventilen 60a-60d ist jeweils ein nicht näher bezeichnetes, zur zweiten Druckquelle 3 hin öffnendes Rückschlagventil parallel geschaltet. Die Ausgangsanschlüsse der Auslassventile 61a, 61b; 61c, 61d sind je Bremskreis über die zugeordnete Rücklaufleitung 64a, 64b mit dem Druckmittelvorratsbehälter 70 verbunden. Eine andere Ausführung der Druckmodulationseinrichtung 6 ist grundsätzlich möglich.

Die der Druckmodulationseinrichtung 6 zugeordnete dritte elektronische Steuer- und Regeleinheit 16 ist vorteilhafterweise mit der zweiten elektronische Steuer- und Regeleinheit 13 über eine Signal- oder Datenleitung 62, z.B. einen Datenbus, verbunden. So kann die dritte Steuer- und Regeleinheit 16 von der zweiten Steuer- und Regeleinheit 13 einen zusätzlichen Druckaufbau anfordern (z.B. für ESC-Funktion).

Bevorzugt sind die Hydraulikeinheit 6 und die Elektronikeinheit 16 als eine elektrohydraulische Steuereinheit (HECU) ausgeführt.

Die erste Druckquelle 2 wird über eine Versorgungsleitung 40 von der ersten Energieversorgungseinheit 4 mit elektrischer Energie versorgt und die zweite Druckquelle 3 wird über eine Versorgungsleitung 50 von der zweiten Energieversorgungseinheit 5 mit elektrischer Energie versorgt. Zur Versorgung der Druckmodulationseinrichtung 6 mit elektrischer Energie sind Mittel 45 vorgesehen, mit deren Hilfe die Druckmodulationseinrichtung 6 von der ersten Energieversorgungseinheit 4, von der zweiten Energieversorgungseinheit 5 oder von beiden Energieversorgungseinheiten versorgt werden kann. Hierbei kann es sich z.B. um eine schaltbare Strom- oder Spannungsversorgung handelnd, so dass die Druckmodulationseinrichtung 6 wahlweise von der ersten Energieversorgungseinheit 4 oder der zweiten Energieversorgungseinheit 5 versorgt wird.

Um eine Antiblockier-Regelung ausführen zu können, umfasst die Bremsanlage beispielsgemäß je Rad des Kraftfahrzeugs einen Raddrehzahlsensor 13. Damit die Signale der Raddrehzahlsensoren 13 auch bei Ausfall einer der Energieversorgungseinheiten 4, 5 oder bei Ausfall einer der Steuer- und Regeleinheiten 12, 13 für eine Antiblockier-Regelung zur Verfügung stehen, werden die Signale der Raddrehzahlsensoren 13 der Steuer- und Regeleinheit 16 der Druckmodulationseinrichtung 6 zugeführt. Beispielsgemäß werden die Raddrehzahlsignale in der Steuer- und Regeleinheit 16 verarbeitet und ausgewertet. Die Raddrehzahlsensoren 13 werden vorteilhafterweise von der Steuer- und Regeleinheit 16 mit elektrischer Energie versorgt.

Um eine Fahrdynamik-Regelung oder stabilisierende Assistenzfunktion ausführen zu können, umfasst die Bremsanlage beispielsgemäß weiterhin eine Sensoreinrichtung 14 zur Erfassung von Fahrdynamikgrößen, deren Signale über eine Signal- oder Datenleitung 63, aus denselben Gründen wie oben ausgeführt, der Steuer- und Regeleinheit 16 der Druckmodulationseinrichtung 6 zugeführt werden und bevorzugt auch dort verarbeitet und ausgewertet werden. Sensoreinrichtung 14 wird vorteilhafterweise von der Steuer- und Regeleinheit 16 mit elektrischer Energie versorgt.

Sensoreinrichtung 14 umfasst beispielsgemäß einen Sensor zur Erfassung der Gierrate des Kraftfahrzeugs und einen Sensor zur Erfassung der Querbeschleunigung des Kraftfahrzeugs. Vorteilhafterweise umfasst Sensoreinrichtung 14 auch einen Sensor zur Erfassung der Längsbeschleunigung des Kraftfahrzeugs. Weiterhin umfasst die Sensoreinrichtung 14 bevorzugt einen Lenkwinkel- oder Lenkradwinkelsensor.

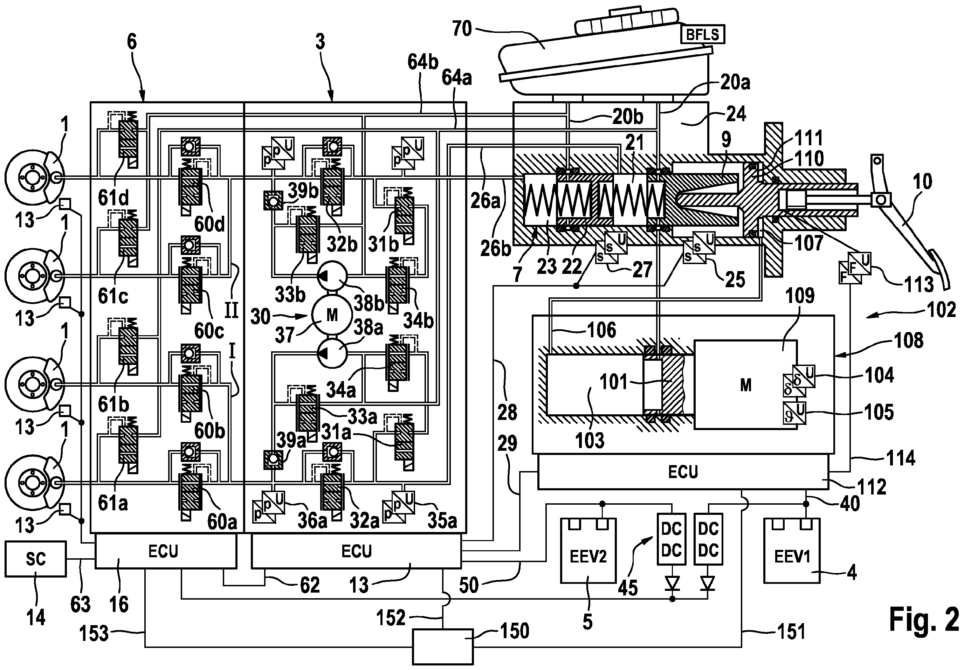

In Fig. 2 ist ein zweites Ausführungsbeispiel einer erfindungsgemäßen Bremsanlage schematisch dargestellt.

Die Bremsanlage unterscheidet sich von dem in Fig. 1 dargestellten ersten Ausführungsbeispiel im Wesentlichen durch die Ausführung der ersten Druckquelle. Übereinstimmende Elemente sind daher in den Fig.1 und 2 mit gleichen Bezugszeichen versehen.

Gemäß dem zweiten Ausführungsbeispiel umfasst die Bremsanlage im Wesentlichen eine erste elektrisch steuerbare Druckquelle 102 und eine zweite elektrisch steuerbare Druckquelle 3 zur Bereitstellung eines Bremsdrucks zur Betätigung der Radbremsen 1, eine elektrisch steuerbare Druckmodulationseinrichtung 6 zum Einstellen radindividueller Bremsdrücke für die Radbremsen 1, eine erste der ersten Druckquelle 102 zugeordnete, eine zweite der zweiten Druckquelle 3 zugeordnete und eine dritte der Druckmodulationseinrichtung 6 zugeordnete elektronische Steuer- und Regeleinheit 112, 13, 16 sowie eine erste elektrische Energieversorgungseinheit 4 und eine von der ersten Energieversorgungseinheit unabhängige, zweite elektrische Energieversorgungseinheit 5.

Die zweite elektrisch steuerbare Druckquelle 3 und die Druckmodulationseinrichtung 6 sind beispielsgemäß wie im ersten Ausführungsbeispiel ausgeführt.

Gemäß dem zweiten Ausführungsbeispiel werden die erste Steuer- und Regeleinheit 112 bzw. die erste Druckquelle 102 von der ersten Energieversorgungseinheit 4 und die zweite Steuer- und Regeleinheit 13 bzw. die zweite Druckquelle 3 von der zweiten Energieversorgungseinheit 5 mit elektrischer Energie versorgt. Zur Energieversorgung der dritten Steuer- und Regeleinheit 16 bzw. der Druckmodulationseinrichtung 6 sind Mittel 45 vorgesehen, die eine Versorgung durch die erste Energieversorgungseinheit 4 oder durch die zweite Energieversorgungseinheit 5 ermöglichen. Zusätzlich kann auch eine Versorgung durch beide Energieversorgungseinheiten möglich sein.

Beispielsgemäß sind Raddrehzahlsensoren 13 sowie eine Sensoreinrichtung 14 zur Erfassung von Fahrdynamikgrößen vorgesehen, deren Signale der Steuer- und Regeleinheit 16 zugeführt werden und welche von der Steuer- und Regeleinheit 16 mit elektrischer Energie versorgt werden. Ein Datenaustausch zwischen der dritten Steuer- und Regeleinheit 16 und der zweiten Steuer- und Regeleinheit 13 ist über die Signal- oder Datenleitung 62 möglich.

Die erste elektrisch steuerbare Druckquelle 102 umfasst einen zweikreisigen Hauptbremszylinder 7 entsprechend dem ersten Ausführungsbeispiel, dessen Druckräume 21, 23 mittels hydraulischer Verbindungen 26a, 26b mit der Druckmodulationseinrichtung 6 in Verbindung stehen. Druckquelle 102 umfasst weiterhin einen elektrisch steuerbaren Bremskraftverstärker 108, welcher dem Hauptbremszylinder 7 vorgeschaltet ist.

Der Bremskraftverstärker 108 umfasst beispielsgemäß eine hydraulische Zylinder-Kolben-Anordnung, deren Kolben 101 einen Druckraum 103 begrenzt und von einem schematisch angedeuteten elektromechanischen Aktuator 109, z.B. einem Elektromotor und einem nachgeschalteten Rotations-Translations-Getriebe, betätigbar ist. Ein der Erfassung der Rotorlage des Elektromotors dienender, lediglich schematisch angedeuteter Rotorlagensensor ist mit dem Bezugszeichen 104 bezeichnet. Zusätzlich kann auch ein Temperatursensor 105 zum Erfassen der Temperatur der Motorwicklung verwendet werden.

Das Bremspedal 10 der Bremsanlage ist mechanisch mit einem Kolben 110 mit einer Ringfläche 111 gekoppelte, welcher bei einer Verschiebung in Bremsbetätigungsrichtung mechanisch den ersten Hauptbremszylinderkolben 9 betätigt. Die Ringfläche 111 begrenzt mit dem Gehäuse 24 eine hydraulische Kammer 107, wobei eine Druckwirkung in der Kammer 107 einer Kraft entspricht, die auf den ersten Hauptbremszylinderkolben 9 in der Bremsbetätigungsrichtung wirkt. Der Druckraum 103 der Zylinder-Kolben-Anordnung ist mit der Kammer 107 über eine Verbindung 106 verbunden, so dass der Hauptbremszylinderkolben 9 durch Ansteuerung des elektromechanischen Aktuators 109 betätigbar ist.

Beispielsgemäß sind der ersten Druckquelle 102 zwei unabhängige Wegsensoren 25 und 27 zugeordnet, die z.B. eine Verschiebung der Kolben 9 und 22 erfassen, und deren Signale über die Signal- oder Datenleitung 28 an die der zweiten Druckquelle 3 zugeordnete zweite elektronische Steuer- und Regeleinheit 13 übermittelt werden. Weiterhin ist der ersten Druckquelle 102 ein Kraftsensor 113 zugeordnet, der eine vom Fahrer aufgebrachte Bremspedalbetätigungskraft erfasst. Dessen Signale werden über eine Signal- oder Datenleitung 114 der ersten elektronischen Steuer- und Regeleinheit 112 bereitgestellt.

Zwischen der ersten und der zweiten Steuer- und Regeleinheit 112, 13 ist vorteilhafterweise eine Signal- oder Datenleitung 29, z.B. ein Datenbus, vorhanden, über welche die Einheiten Daten austauschen können und über welche die erste Steuer- und Regeleinheit 112 der zweiten Steuer- und Regeleinheit 13 z.B. einen Zustandsstatus der ersten Druckquelle 102 übermitteln kann, wie dies anhand des ersten Ausführungsbeispiels der Fig. 1 bereits erläutert wurde.

Gemäß dem zweiten Ausführungsbeispiel ist eine vierte elektronische Steuer- und Regeleinheit 150 vorgesehen, in welcher eine Autopilot-Funktion durchgeführt wird. Eine solche vierte Steuer- und Regeleinheit 150 kann auch gemäß Fig. 1 vorgesehen sein. Beispielsgemäß ist die vierte Steuer- und Regeleinheit 150 über jeweils einen Datenbus 151, 152, 153 mit der erste, der zweiten und der dritten Steuer- und Regeleinheit 112, 13, 16 verbunden. Anstelle eines Datenbusses ist auch ein anderer Datenübertragungspfad, z.B. eine drahtlose Übertragung/Verbindung, denkbar.

Vorteilhafterweise nimmt die dritte Steuer- und Regeleinheit 16 sämtliche Fahrdynamik-Regelaufgaben wahr und die beiden anderen Steuer- und Regeleinheiten 12, 112 ; 13 haben lediglich die Aufgabe, die beiden Bremskreisdrücke in Form der Modulatorvordrücke bereitzustellen. Die Solldruckvorgabe für die entsprechenden Druckregler ergibt sich dabei aus den Bremswünschen von Fahrer und elektronischem Autopiloten sowie Bremsdruckanforderungen der Fahrdynamik-ECU 16 - beispielsweise zur Durchführung von ESC- oder Rollover-Prevention-Eingriffen.

Vorteilhafterweise ist vorgesehen, dass bei einfachen Komfortbremsungen nur die erste Druckquelle zum Einsatz kommt, während die zweite Druckquelle den Modulatorvordruckaufbau immer dann unterstützt, wenn die erste Druckquelle entweder ausgefallen ist oder deren Dynamik oder deren Maximaldruck nicht ausreicht, um die Bremsdruckanforderung zu bedienen.

Der Fahrer teilt der Bremsanlage seinen Bremswunsch durch die Bremspedalkraft und den Bremspedalweg mit. Entsprechend den gesetzlichen Regelungen für Kraftfahrzeugbremssysteme ist bevorzugt eine weitere Bedienmöglichkeit vorgesehen, die z.B. über das Bedienelement einer elektrischen Parkbremse realisiert ist.
Der elektronische Autopilot ist entweder als ein Rechnerverbund ausgeführt, der im Kraftfahrzeug lokalisiert ist (vierte elektronische Steuer- und Regeleinheit 150). Aber es ist auch denkbar, dass das Kraftfahrzeug ferngesteuert wird. Zum Beispiel könnte ein menschlicher Operator oder ein externes Rechnernetzwerk die Autopilotfunktion übernehmen, beispielsweise um das Fahrzeug in einem Parkhaus eizuparken. In jedem Fall muss der Bremswunsch des Autopiloten sicher zur Bremsanlage übertragen und dort sicher umgesetzt werden. Dazu ist vorteilhafterweise vorgesehen, dass der Autopilot-Bremswunsch auf separaten Datenübertragungspfaden (beispielsgemäß Datenbussen 151, 152) zur ersten und zur zweiten Steuer- und Regeleinheit 112, 13 geleitet wird.

Das Ausführungsbeispiel der Fig. 2 bietet sogar die Möglichkeit, die Autopilot-Bremswunsch-Datenübertragung noch sicherer auszuführen, indem die Information auf einem dritten unabhängigen Datenübertragungspfad (beispielsgemäß Datenbuss 153) zur dritten Steuer- und Regeleinheit 16 geleitet wird.

In den beispielsgemäßen Bremsanlagen gibt es zwei voneinander unabhängige Instanzen mit voneinander unabhängigen Energieversorgungen (beispielsgemäß Druckquelle 2 bzw. 102 mit Energieversorgungseinheit 4 und Druckquelle 3 mit Energieversorgungseinheit 5), die kontrolliert hydraulische Stellenergie zur Betätigung der Radbremsen 1 bereitstellen können.

Um die Anforderungen für das automatisierte Fahren und insbesondere eine hohe Verfügbarkeit einer radindividuellen Bremsdruckregelung für Assistenzfunktionen (wie z.B. ABS, ESC) zu erreichen, ist die Druckmodulationseinrichtung 6 hydraulisch von den übrigen hydraulischen Komponenten separiert und mit einer eigenen Steuer- und Regeleinheit 16 ausgestattet. Die redundante elektrische Energieversorgung 4, 5 wird für das automatisierte Fahren genutzt, um die Verfügbarkeit der Assistenzfunktionen zu erhöhen.

Die beiden unabhängigen Instanzen zur kontrollierten Bereitstellung hydraulischer Stellenergie werden im Wesentlichen durch einen elektrisch steuerbaren Bremskraftverstärker 8 bzw. 108 und einen elektrisch steuerbaren Druckverstärker 3 gebildet.

Vorteilhafterweise genügt es, nur die Druckmodulationseinrichtung 6 redundant (4 und 5) und die beiden Druckquellen 2 (bzw. 102), 3 jeweils einfach aus verschiedenen, voneinander unabhängigen Energiequellen 4, 5 mit elektrischer Energie zu versorgen.

Die beispielsgemäßen Bremsanlagen bieten den Vorteil, dass nach dem Ausfall einer der Energieversorgungen 4, 5 oder einer der Steuer- und Regeleinheiten 12 (bzw. 112), 13 der Druckquellen immer noch eine Druckquelle 2 (bzw. 102) oder 3 und die Druckmodulationseinrichtung 6 zur Verfügung steht, um die für ein automatisiertes Fahren benötigte sichere Bremsfunktion darzustellen.

## Patentansprüche

1. Bremsanlage für ein Kraftfahrzeug zur Betätigung von hydraulisch betätigbaren Radbremsen (1), mit
• einer ersten elektrisch steuerbaren Druckquelle (2, 102), zur Bereitstellung eines Bremsdrucks zur Betätigung der Radbremsen,
• einer zweiten elektrisch steuerbaren Druckquelle (3) zur Bereitstellung eines Bremsdrucks zur Betätigung der Radbremsen,
• einer ersten elektrischen Energieversorgungseinheit (4),
• einer zweiten elektrischen Energieversorgungseinheit (5), welche von der ersten elektrischen Energieversorgungseinheit unabhängig ist, und
• einer elektrisch steuerbaren Druckmodulationseinrichtung (6) zum Einstellen radindividueller Bremsdrücke für die Radbremsen (1) mit zumindest einem elektrisch betätigbaren Einlassventil (60a-60d) für jede Radbremse (1),
wobei die erste Druckquelle (2, 102) von der ersten Energieversorgungseinheit (4) mit elektrischer Energie versorgbar ist und die zweite Druckquelle (3) von der zweiten Energieversorgungseinheit (5) mit elektrischer Energie versorgbar ist,
**dadurch gekennzeichnet, dass** die Druckmodulationseinrichtung (6) von der ersten Energieversorgungseinheit (4) und der zweiten Energieversorgungseinheit (5) mit elektrischer Energie versorgbar ist.

2. Bremsanlage nach Anspruch 1, **dadurch gekennzeichnet, dass** die Druckmodulationseinrichtung (6) als eine eigenständige hydraulische Einheit ausgeführt ist.

3. Bremsanlage nach Anspruch 1 oder 2, **dadurch gekennzeichnet, dass** eine der ersten Druckquelle zugeordnete erste elektronische Steuer- und Regeleinheit (12, 112) zur Ansteuerung der ersten Druckquelle (2, 102), eine der zweiten Druckquelle zugeordnete zweite elektronische Steuer- und Regeleinheit (13) zur Ansteuerung der zweiten Druckquelle (3) und eine der Druckmodulationseinrichtung zugeordnete dritte elektronische Steuer- und Regeleinheit (16) zur Ansteuerung der Druckmodulationseinrichtung (6) vorgesehen sind.

4. Bremsanlage nach Anspruch 3, **dadurch gekennzeichnet, dass** die erste elektronische Steuer- und Regeleinheit (12, 112) von der ersten Energieversorgungseinheit (4) mit elektrischer Energie versorgbar ist, dass die zweite elektronische Steuer- und Regeleinheit (13) von der zweiten Energieversorgungseinheit (5) mit elektrischer Energie versorgbar ist und dass die dritte elektronische Steuer- und Regeleinheit (16) von der ersten Energieversorgungseinheit (4) und von der zweiten Energieversorgungseinheit (5) mit elektrischer Energie versorgbar ist.

5. Bremsanlage nach Anspruch 3 oder 4, **dadurch gekennzeichnet, dass** die Bremsanlage Raddrehzahlsensoren (13) umfasst oder mit solchen verbunden ist, wobei die Signale der Raddrehzahlsensoren (13) der der Druckmodulationseinrichtung zugeordneten dritten elektronischen Steuer- und Regeleinheit (16) zugeführt werden.

6. Bremsanlage nach einem der Ansprüche 3 bis 5, **dadurch gekennzeichnet, dass** die Bremsanlage eine Sensoreinrichtung (14) zur Erfassung von Fahrdynamikgrößen umfasst oder mit einer solchen verbunden ist, wobei die Signale der Sensoreinrichtung der der Druckmodulationseinrichtung zugeordneten dritten elektronischen Steuer- und Regeleinheit (16) zugeführt werden.

7. Bremsanlage nach einem der Ansprüche 3 bis 6, **dadurch gekennzeichnet, dass** die erste, die zweite und die dritte Steuer- und Regeleinheit (12, 112, 13, 16) über Datenbusse (29, 62) miteinander verbunden sind.

8. Bremsanlage nach einem der Ansprüche 3 bis 7, **dadurch gekennzeichnet, dass** zumindest eine der Steuer- und Regeleinheiten (12, 112, 13, 16) mit einer vierten elektronischen Steuer- und Regeleinheit (150) über einen Datenübertragungspfad verbunden oder verbindbar ist, in welcher eine Autopilot-Funktion durchgeführt wird.

9. Bremsanlage nach Anspruch 8, **dadurch gekennzeichnet, dass** zumindest die erste und die zweite Steuer- und Regeleinheit (12, 112, 13) über jeweils einen Datenübertragungspfad (151, 152, 153), insbesondere einen Datenbus, mit der vierten Steuer- und Regeleinheit (150) verbunden oder verbindbar ist.

10. Bremsanlage nach einem der Ansprüche 1 bis 9, **dadurch gekennzeichnet, dass** die erste elektrisch steuerbare Druckquelle (2, 102) einen Hauptbremszylinder (7) mit einem, insbesondere diesem vorgeschalteten, elektrisch steuerbaren Bremskraftverstärker (8, 108) umfasst.

11. Bremsanlage nach Anspruch 10, **dadurch gekennzeichnet, dass** der elektrisch steuerbare Bremskraftverstärker (8, 108) einen elektrisch steuerbaren elektromechanischen Aktuator, insbesondere mit einem Elektromotor und einem Translations-Rotations-Getriebe, umfasst, welcher einen Kolben (9) des Hauptbremszylinders (7) betätigt.

12. Bremsanlage nach Anspruch 10 oder 11, **dadurch gekennzeichnet, dass** der elektrisch steuerbare Bremskraftverstärker (108) eine hydraulische Zylinder-Kolben-Anordnung umfasst, deren Kolben (101) durch einen elektromechanischen Aktuator (109) verschiebbar ist, wobei der Hauptbremszylinder von der Zylinder-Kolben-Anordnung betätigbar ist.

13. Bremsanlage nach einem der Ansprüche 1 bis 12, **dadurch gekennzeichnet, dass** die zweite Druckquelle (3) hydraulisch zwischen der ersten Druckquelle (2, 102) und der Druckmodulationseinrichtung (6) angeordnet ist.

14. Bremsanlage nach einem der Ansprüche 1 bis 13, **dadurch gekennzeichnet, dass** die zweite Druckquelle (3) einen elektrisch steuerbaren Druckverstärker, insbesondere ein Motor-Pumpen-Aggregat (30) mit einer zumindest zweikreisigen hydraulischen Pumpe (38a, 38b), und insbesondere elektrisch betätigbare Ventile (31, 32, 33, 34) zum Einstellen des an die Druckmodulationseinrichtung (6) weitergeleiteten Bremsdrucks oder der an die Druckmodulationseinrichtung (6) weitergeleiteten Bremsdrücke, umfasst.

## Claims

1. Braking system for a motor vehicle for operating wheel brakes (1) that can be operated hydraulically, with
• a first electrically controllable pressure source (2, 102) for providing a brake pressure for operation of the wheel brakes,
• a second electrically controllable pressure source (3) for providing a brake pressure for operation of the wheel brakes,
• a first electrical power supply unit (4),
• a second electrical power supply unit (5) that is independent of the first electrical power supply unit, and
• an electrically controllable pressure modulation device (6) for setting wheel-specific brake pressures for the wheel brakes (1) with at least one inlet valve (60a-60d) that can be operated electrically for each wheel brake (1),
wherein the first pressure source (2, 102) can be supplied with electrical energy by the first power supply unit (4) and the second pressure source (3) can be supplied with electrical energy by the second power supply unit (5), **characterized in that** the pressure modulation device (6) can be supplied with electrical energy by the first power supply unit (4) and the second power supply unit (5).

2. Braking system according to Claim 1, **characterized in that** the pressure modulation device (6) is implemented as a standalone hydraulic unit.

3. Braking system according to Claim 1 or 2, **characterized in that** a first electronic control and regulating unit (12, 112) that is associated with the first pressure source for actuating the first pressure source (2, 102), a second electronic control and regulating unit (13) associated with the second pressure source (3) for actuating the second pressure source and a third electronic control and regulating unit (16) associated with the pressure modulation device for actuating the pressure modulation device (6) are provided.

4. Braking system according to Claim 3, **characterized in that** the first electronic control and regulating unit (12, 112) can be supplied with electrical energy by the first power supply unit (4), that the second electronic control and regulating unit (13) can be supplied with electrical energy by the second power supply unit (5) and that the third electronic control and regulating unit (16) can be supplied with electrical energy by the first power supply unit (4) and by the second power supply unit (5).

5. Braking system according to Claim 3 or 4, **characterized in that** the braking system comprises or is connected to wheel revolution rate sensors (13), wherein the signals of the wheel revolution rate sensors (13) are delivered to the third electronic control and regulating unit (16) that is associated with the pressure modulation device.

6. Braking system according to any one of Claims 3 to 5, **characterized in that** the braking system comprises or is connected to a sensor device (14) for detecting driving dynamics variables, wherein the signals of the sensor device are delivered to the third electronic control and regulating unit (16) that is associated with the pressure modulation device.

7. Braking system according to any one of Claims 3 to 6, **characterized in that** the first, the second and the third control and regulating units (12, 112, 13, 16) are connected to each other by means of data busses (29, 62).

8. Braking system according to any one of Claims 3 to 7, **characterized in that** at least one of the control and regulating units (12, 112, 13, 16) is or can be connected by means a data communications path to a fourth electronic control and regulating unit (150) in which an autopilot function is carried out.

9. Braking system according to Claim 8, **characterized in that** at least the first and the second control and regulating units (12, 112, 13) are or can be connected to the fourth control and regulating unit (150) by means of respective data communications paths (151, 152, 153), in particular data busses.

10. Braking system according to any one of Claims 1 to 9, **characterized in that** the first electrically controllable pressure source (2, 102) comprises a master brake cylinder (7) with an electrically controllable brake force booster (8, 108), which is in particular connected upstream thereof.

11. Braking system according to Claim 10, **characterized in that** the electrically controllable brake force booster (8, 108) comprises an electrically controllable electromechanical actuator, in particular with an electric motor and a translation-rotation gearbox, which operates a piston (9) of the master brake cylinder (7).

12. Braking system according to Claim 10 or 11, **characterized in that** the electrically controllable brake force booster (108) comprises a hydraulic cylinder-piston arrangement, the piston (101) of which can be displaced by an electromechanical actuator (109), wherein the master brake cylinder can be operated by the cylinder-piston arrangement.

13. Braking system according to any one of Claims 1 to 12, **characterized in that** the second pressure source (3) is hydraulically disposed between the first pressure source (2, 102) and the pressure modulation device (6).

14. The braking system according to any one of Claims 1 to 13, **characterized in that** the second pressure source (3) comprises an electrically controllable pressure booster, in particular a motor-pump assembly (30) with an at least dual circuit hydraulic pump (38a, 38b), and in particular electrically operated valves (31, 32, 33, 34) for setting the brake pressure or the brake pressures that is or are redirected to the pressure modulation device (6).

## Revendications

1. Système de freinage pour un véhicule automobile destiné à l'actionnement de freins de roue (1) pouvant être actionné hydrauliquement, comprenant
* une première source de pression (2, 102) commandable électriquement destinée à délivrer une pression de freinage servant à l'actionnement des freins de roue,
* une deuxième source de pression (3) commandable électriquement destinée à délivrer une pression de freinage servant à l'actionnement des freins de roue,
* une première unité d'alimentation en énergie électrique (4),
* une deuxième unité d'alimentation en énergie électrique (5), laquelle est indépendante de la première unité d'alimentation en énergie électrique, et
* un dispositif de modulation de pression (6) commandable électriquement destiné à régler les pressions de freinage spécifiques de roue pour les freins de roue (1), comprenant au moins une vanne d'entrée (60a-60d) actionnable électriquement pour chaque frein de roue (1),
la première source de pression (2, 102) pouvant être alimentée en énergie électrique par la première unité d'alimentation en énergie (4) et la deuxième source de pression (3) pouvant être alimentée en énergie électrique par la deuxième unité d'alimentation en énergie (5),
**caractérisé en ce que** le dispositif de modulation de pression (6) peut être alimenté en énergie électrique par la première unité d'alimentation en énergie (4) et par la deuxième unité d'alimentation en énergie (5).

2. Système de freinage selon la revendication 1, **caractérisé en ce que** le dispositif de modulation de pression (6) est réalisé sous la forme d'une unité hydraulique autonome.

3. Système de freinage selon la revendication 1 ou 2, **caractérisé par** la présence d'une première unité de commande et de régulation électronique (12, 112), associée à la première source de pression et destinée à commander la première source de pression (2, 102), d'une deuxième unité de commande et de régulation électronique (13), associée à la deuxième source de pression et destinée à commander la deuxième source de pression (3) et d'une troisième unité de commande et de régulation électronique (16) associée au dispositif de modulation de pression et destinée à commander le dispositif de modulation de pression (6).

4. Système de freinage selon la revendication 3, **caractérisé en ce que** la première unité de commande et de régulation électronique (12, 112) peut être alimentée en énergie électrique par la première unité d'alimentation en énergie (4), **en ce que** la deuxième unité de commande et de régulation électronique (13) peut être alimentée en énergie électrique par la deuxième unité d'alimentation en énergie (5) et **en ce que** la troisième unité de commande et de régulation électronique (16) peut être alimentée en énergie électrique par la première unité d'alimentation en énergie (4) et par la deuxième unité d'alimentation en énergie (5).

5. Système de freinage selon la revendication 3 ou 4, **caractérisé en ce que** le système de freinage comporte des capteurs de vitesse de rotation de roue (13) ou est relié à de tels capteurs, les signaux des capteurs de vitesse de rotation de roue (13) étant acheminés à la troisième unité de commande et de régulation électronique (16) associée au dispositif de modulation de pression.

6. Système de freinage selon l'une des revendications 3 à 5, **caractérisé en ce que** le système de freinage comporte un dispositif capteur (14) destiné à détecter des grandeurs dynamiques de conduite ou est relié à un tel dispositif, les signaux du dispositif capteur étant acheminés à la troisième unité de commande et de régulation électronique (16) associée au dispositif de modulation de pression.

7. Système de freinage selon l'une des revendications 3 à 6, **caractérisé en ce que** la première, la deuxième et troisième unité de commande et de régulation (12, 112, 13, 16) sont reliées ensemble par le biais de bus de données (29, 62).

8. Système de freinage selon l'une des revendications 3 à 7, **caractérisé en ce qu'**au moins l'une des unités de commande et de régulation (12, 112, 13, 16) est reliée ou peut être reliée, par le biais d'un chemin de transmission de données, à une quatrième unité de commande et de régulation (150) dans laquelle est exécutée une fonction de pilotage automatique.

9. Système de freinage selon la revendication 8, **caractérisé en ce qu'**au moins la première et la deuxième unité de commande et de régulation (12, 112, 13) sont reliées ou peuvent être reliées, par le biais d'un chemin de transmission de données (151, 152, 153) respectif, notamment un bus de données, à la quatrième unité de commande et de régulation (150).

10. Système de freinage selon l'une des revendications 1 à 9, **caractérisé en ce que** la première source de pression (2, 102) commandable électriquement comporte un maître-cylindre de frein (7) doté d'un servofrein (8, 108) commandable électriquement, notamment branché en amont de celui-ci.

11. Système de freinage selon la revendication 10, **caractérisé en ce que** le servofrein (8, 108) commandable électriquement comporte un actionneur électromécanique commandable électriquement, notamment doté d'un engrenage de translation et rotation, qui actionne un piston (9) du maître-cylindre de frein (7).

12. Système de freinage selon la revendication 10 ou 11, **caractérisé en ce que** le servofrein (108) commandable électriquement comporte un arrangement cylindre-piston hydraulique dont le piston (101) peut être amené à coulisser par un actionneur électromécanique (109), le maître-cylindre de frein pouvant être actionné par l'arrangement cylindre-piston.

13. Système de freinage selon l'une des revendications 1 à 12, **caractérisé en ce que** la deuxième source de pression (3) est disposée du point de vue hydraulique entre la première source de pression (2, 102) et le dispositif de modulation de pression (6).

14. Système de freinage selon l'une des revendications 1 à 13, **caractérisé en ce que** la deuxième source de pression (3) comporte un surpresseur, notamment un groupe moteur-pompe (30) comprenant une pompe hydraulique (38a, 38b) à au moins deux circuits et des vannes (31, 32, 33, 34) pouvant être actionnées, notamment électriquement, pour le réglage de la pression de freinage retransmise au dispositif de modulation de pression (6) ou des pressions de freinage retransmises au dispositif de modulation de pression (6).
